# EUROPÄISCHE PATENTANMELDUNG

(11) **EP 3 617 974 A1**
(43) Veröffentlichungstag der Anmeldung: **04.03.2020**
(21) Anmeldenummer: 18192004.2
(22) Anmeldetag: 31.08.2018
(51) Int. Cl.: G06Q 20/06, G06Q 20/38, G06F 21/62

(54) **EINRICHTUNG UND VERFAHREN ZUM BEREITSTELLEN EINER ORAKEL-TRANSAKTION IN EINEM VERTEILTEN DATENBANKSYSTEM**

(71) Anmelder: Siemens Aktiengesellschaft, 80333 München (DE)
(72) Erfinder: Falk, Rainer, 85586 Poing (DE)

(57) **Zusammenfassung**

Es wird eine Einrichtung (10) zum Bereitstellen einer Orakel-Transaktion (51) in einem verteilten Datenbanksystem (100) mit einem Transaktionsbuch (4) vorgeschlagen. Die Einrichtung (10) umfasst eine erste Einheit (1) zum Erlangen der Orakel-Transaktion (51); eine zweite Einheit (2) zum Ermitteln, ob in dem verteilten Datenbanksystem (10) ein Bedarf an der Orakel-Transaktion (51) besteht; und eine dritte Einheit (3) zum Bereitstellen der Orakel-Transaktion (51) in dem verteilten Datenbanksystem (100) nur unter der Bedingung, dass in dem verteilten Datenbanksystem (100) der Bedarf an der Orakel-Transaktion (51) besteht.

Eine durch das Bestätigen von Orakel-Transaktionen bedingte Transaktionslast des verteilten Datenbanksystems kann vorteilhaft gesenkt werden.

Weiterhin wird ein entsprechendes Verfahren vorgeschlagen.

## Beschreibung

Die vorliegende Erfindung betrifft das Gebiet der verteilten Datenbanksysteme und spezieller eine Einrichtung und ein Verfahren zum Bereitstellen einer Orakel-Transaktion in einem verteilten Datenbanksystem.

In einem, etwa mit Blockketten-Technologie implementierten, verteilten Datenbanksystem können Transaktionen ohne Clearing-Stelle oder besonderes Vertrauensverhältnis zwischen den Transaktionspartnern oder einer Clearing-Stelle basierend auf einem Konsens zwischen den Transaktionspartnern transparent und manipulationsgeschützt abgewickelt werden. Ein Transaktionsdatensatz kann Programmcode umfassen oder referenzieren, der beim Bestätigen der Transaktion in dem verteilten Datenbanksystem ausgeführt wird (sog. "Smart Contract"). Ein derartiges verteiltes Datenbanksystem eignet sich als IT-Infrastrukturplattform zur Steuerung eines industriellen Automatisierungssystems und dergleichen.

Die Abwicklung einer Transaktion bzw. die Ausführung eines Smart Contracts kann von einem Ereignis in der realen Welt abhängen. Eine Information über das Ereignis, wie etwa eine Uhrzeit oder ein Messwert, kann von einer Orakel-Einrichtung als Transaktion in dem Datenbanksystem bereitgestellt werden. Herkömmliche Orakel-Einrichtungen stellen solche Transaktionen periodisch bereit. Dadurch steigt eine Transaktionslast des verteilten Datenbanksystems gegebenenfalls erheblich an.

Vor diesem Hintergrund besteht eine Aufgabe der vorliegenden Erfindung darin, das Bereitstellen von Informationen über ein Ereignis in der realen Welt an ein verteiltes Datenbanksystem zu verbessern.

Demgemäß wird eine Einrichtung zum Bereitstellen einer Orakel-Transaktion in einem verteilten Datenbanksystem mit einem Transaktionsbuch vorgeschlagen. Die Einrichtung weist auf: eine erste Einheit zum Erlangen der Orakel-Transaktion; eine zweite Einheit zum Ermitteln, ob in dem verteilten Datenbanksystem ein Bedarf an der Orakel-Transaktion besteht; und eine dritte Einheit zum Bereitstellen der Orakel-Transaktion in dem verteilten Datenbanksystem unter der Bedingung, dass in dem verteilten Datenbanksystem der Bedarf an der Orakel-Transaktion besteht.

Die dritte Einheit kann dazu eingerichtet sein, die Orakel-Transaktion nur unter der Bedingung bereitzustellen, dass in dem verteilten Datenbanksystem der Bedarf an der Orakel-Transaktion besteht.

Die dritte Einheit kann dazu eingerichtet sein, die Orakel-Transaktion insbesondere unter der Bedingung bereitzustellen, dass in dem verteilten Datenbanksystem der Bedarf an der Orakel-Transaktion besteht.

Somit kann vorteilhafterweise die Orakel-Transaktion in dem verteilten Datenbanksystem nur und/oder insbesondere dann bereitgestellt und durch dieses bestätigt werden, wenn der Bedarf an der Orakel-Transaktion ermittelt wurde. Wird der Bedarf nicht ermittelt, kann das Bereitstellen und Bestätigen der Orakel-Transaktion unterbleiben. Dadurch kann vorteilhaft die Transaktionslast des verteilten Datenbanksystems gesenkt werden. Insbesondere können ein von dem Transaktionsbuch belegter Speicherplatz reduziert und ein Rechenaufwand zum Bestätigen der Orakel-Transaktion eingespart werden, wenn an dieser kein Bedarf besteht.

Das verteilte Datenbanksystem kann insbesondere aus einer Anzahl Knoteneinrichtungen gebildet sein. Das Transaktionsbuch (engl. "ledger") des verteilten Datenbanksystems kann als Kette oder Pfad von bestätigten Blöcken repräsentiert werden. Insbesondere umfasst ein jeweiliger Block eine Anzahl bestätigter Transaktionen. Die Verkettung kann mittels Verkettungsprüfsummen gebildet sein. Eine jeweilige der Anzahl Knoteneinrichtungen kann eine Kette von bestätigten Blöcken speichern, die eine Konsensversion des Transaktionsbuchs repräsentiert. Insbesondere kann das verteilte Datenbanksystem ein Blockketten-Netzwerk bzw. eine Blockchain sein.

Eine Anzahl bedeutet vorliegend eine Anzahl von eins oder mehr.

Eine Transaktion kann Nutzdaten und/oder Programmcode (sog. "Smart Contract") umfassen, die einen Übergang eines von dem Transaktionsbuch des verteilten Datenbanksystems beschriebenen Zustands in einen neuen gültigen Zustand beschreiben. Eine Transaktion kann weiterhin eine oder mehrere digitale Signaturen umfassen.

"Block" bezeichnet vorliegend insbesondere einen gemäß einer Konsensregel des verteilten Datenbanksystems gebildeten Datenblock. Ein jeweiliger Block kann neben der Anzahl von Transaktionen weiterhin insbesondere umfassen: eine Anzahl von kryptographischen Transaktionsprüfsummen und/oder eine einzelne Datenblockprüfsumme; eine kryptographische Verkettungsprüfsumme sowie einen Nachweiswert, der ein berechtigtes Interesse einer Knoteneinrichtung, die den Block gebildet hat, am reibungslosen Betrieb des Datenbanksystems dokumentiert, wie beispielsweise ein Proof-of-Work, ein Proof-of-Stake, eine Signatur eines Mitglieds eines Backbones aus privilegierten Knoteneinrichtungen (Permissioned Ledger) und dergleichen.

Unter "Orakel-Transaktion" ist insbesondere eine Transaktion zu verstehen, die als Nutzdaten eine Information über ein Ereignis in der realen Welt umfasst (im Weiteren auch "Orakel-Wert"). Die Information kann beispielsweise eine Uhrzeit, ein Sensor-Messwert, eine Wechselkurs- oder Börsenkursnotierung, ein Verweis auf einen externen Speicherort mit weiteren Informationen und eine Prüfsumme der weiteren Informationen oder dergleichen sein.

Die Nutzdaten der Orakel-Transaktion können insbesondere als JSON-Objekt oder als REST-Web-Service-Responsenachricht oder als OPC-UA-Nachricht codiert sein.

Unter der "realen Welt" kann die physikalische, natürliche und/oder technische Welt verstanden werden, insbesondere eine Menge aus Zuständen und/oder Abläufen außerhalb des verteilten Datenbanksystems, insbesondere außerhalb des Transaktionsbuchs des verteilten Datenbanksystems, über welche das verteilte Datenbanksystem mit eigener Funktionalität keine Kenntnis erlangen kann bzw. über welche das verteilte Datenbanksystem nur anhand einer Orakel-Transaktion Kenntnis erlangen kann.

"Erlangen der Orakel-Transaktion" kann insbesondere umfassen: Empfangen der Orakel-Transaktion von einer Orakel-Einrichtung und/oder Erzeugen der Orakel-Transaktion auf Grundlage einer empfangenen, gemessenen oder generierten Information. Anders ausgedrückt kann die vorgeschlagene Einrichtung selbst eine Orakel-Einrichtung sein, sie kann eine zwischen das verteilte Datenbanksystem und eine Orakel-Einrichtung geschaltete Einheit sein, oder sie kann eine Mischform aus beidem sein. Im Folgenden ist unter einer "der vorgeschlagenen Einrichtung zugeordneten Orakel-Einrichtung" somit die vorgeschlagene Einrichtung selbst und/oder eine zu der vorgeschlagenen Einrichtung externe Orakel-Einrichtung zu verstehen.

Unter "Bedarf an der Orakel-Transaktion" ist insbesondere eine Situation zu verstehen, in der sich das Vorhandensein der Orakel-Transaktion und/oder einer Instanz der Orakel-Transaktion auf das Bereitstellen/Nichtbereitstellen einer Transaktion in dem verteilten Datenbanksystem und/oder auf das Bestätigen/Nichtbestätigen einer dem verteilten Datenbanksystem bereitgestellten unbestätigten Transaktion auswirkt.

Der Bedarf an der Orakel-Transaktion kann beispielsweise anhand einer Prüfung von vorliegenden, noch unbestätigten Transaktionen des verteilten Datenbanksystems ermittelt werden. Auch können Smart Contracts des verteilten Datenbanksystems analysiert werden. Ebenso ist es möglich, Heuristiken zu verwenden, um den Bedarf an der Orakel-Transaktion bzw. einer Instanz der Orakel-Transaktion zu ermitteln. Z.B. kann sich aus einer Heuristik ergeben, dass der Bedarf während laufender Produktion einer Fertigungsautomatisierung vorliegt, bei Benutzung einer bestimmten Maschine, bei Durchführen eines bestimmten Fertigungsschritts oder bei Bearbeitung einer bestimmten Art von Produktionsauftrag. Diese Information kann beispielsweise aus einem Produktionsplanungs-System oder einer Maschinensteuerung ausgelesen werden. Die Heuristik zur Bedarfsermittlung kann vorgebbar sein oder angelernt werden. Der Bedarf an der Orakel-Transaktion kann separat für jeweils eine einzelne Orakel-Transaktion ermittelt werden, und/oder vergröbert für eine Mehrzahl von gleichartigen Orakel-Transaktionen bzw. Instanzen davon. So kann z.B. der Bedarf bestehen, ca. einmal pro Stunde eine jeweilige Orakel-Transaktion bereitzustellen, oder der Bedarf, dass die jeweilige Orakel-Transaktion ca. alle 10 Sekunden bereitgestellt wird. Insbesondere kann eine Häufigkeit, wie häufig Instanzen der Orakel-Transaktionen bereitgestellt werden, abhängig von dem ermittelten Bedarf angepasst werden. Mehrere Prüfungen können kombiniert werden, um den Bedarf der Transaktion zu ermitteln.

Zum Ermitteln, dass der Bedarf an der Orakel-Transaktion in dem verteilten Datenbanksystem besteht, kann die zweite Einheit mit mindestens einer der Knoteneinrichtungen des verteilten Datenbanksystems kommunikativ gekoppelt sein und/oder selbst Teil einer der Knoteneinrichtungen des verteilten Datenbanksystems sein.

Entsprechendes gilt für die dritte Einheit und das Bereitstellen der Orakel-Transaktion in dem verteilten Datenbanksystem.

Unter "in dem verteilten Datenbanksystem Bereitstellen" im Hinblick auf eine Transaktion, wie etwa die Orakel-Transaktion, und/oder einen Block ist insbesondere zu verstehen, dass die Transaktion als unbestätigte Transaktion bzw. der Block als unbestätigter Block an mindestens eine der Knoteneinrichtungen des verteilten Datenbanksystems übermittelt wird. An die übrigen der Knoteneinrichtungen des verteilten Datenbanksystems kann die bereitgestellte unbestätigte Transaktion bzw. der bereitgestellte unbestätigte Block direkt, indirekt oder auf Peer-to-Peer-Weise übermittelt werden.

Unter "Bestätigen" einer Transaktion, insbesondere einer dem Datenbanksystem bereitgestellten unbestätigten Transaktion, durch das verteilte Datenbanksystem ist insbesondere zu verstehen, dass die unbestätigte Transaktion als bestätigte Transaktion in die Konsensversion des Transaktionsbuchs des verteilten Datenbanksystems eingefügt wird.

Spezieller kann eine blockbildende Knoteneinrichtung der Knoteneinrichtungen des verteilten Datenbanksystems die unbestätigte Transaktion prüfen, bei erfolgreicher Prüfung in einen von ihr gebildeten Block aufnehmen, den gebildeten Block als unbestätigten Block in dem verteilten Datenbanksystem bereitstellen, und eine Mehrzahl und bevorzugt alle der Knoteneinrichtungen können den unbestätigten Block prüfen und bei erfolgreicher Prüfung als bestätigten Block an die in ihnen jeweils gespeicherte Repräsentation des Transaktionsbuchs anfügen.

Eine von den Knoteneinrichtungen des verteilten Datenbanksystems implementierte und bei dem jeweiligen Prüfen berücksichtigte Konsensregel kann dafür sorgen, dass trotz der Abwesenheit einer Clearing-Stelle und trotz dessen, dass nicht notwendigerweise alle der Knoteneinrichtungen des verteilten Datenbanksystems direkt miteinander kommunizieren und/oder einander vertrauen, sich ein Mehrheitskonsens dergestalt ausbildet, dass in der Mehrzahl und bevorzugt allen der Knoteneinrichtungen die gleiche Repräsentation des Transaktionsbuchs ("Konsensversion des Transaktionsbuchs") gespeichert ist.

Bei dem jeweiligen Prüfen kann in der Transaktion bzw. in einem von der Transaktion referenzierten Smart Contract umfasster Programmcode zur Ausführung kommen.

Die jeweilige Einheit, zum Beispiel die erste Einheit, die zweite Einheit und die dritte Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die die zweite Einheit dazu eingerichtet, zu ermitteln, dass der Bedarf an der Orakel-Transaktion besteht, wenn in dem Transaktionsbuch des verteilten Datenbanksystems ein Smart Contract bestätigt ist, der die Orakel-Transaktion referenziert.

Demgemäß kann vorteilhaft erkannt werden, dass der Bedarf an der Orakel-Transaktion nicht besteht, wenn das Transaktionsbuch keinen Smart Contract umfasst, der die Orakel-Transaktion referenziert.

Die zweite Einheit kann einen jeweiligen der in dem Transaktionsbuch umfassten Smart Contracts daraufhin prüfen, ob er die Orakel-Transaktion referenziert.

Unter "referenzieren" ist insbesondere zu verstehen, dass Programmcode des jeweiligen Smart Contracts bei Nichtvorhandensein der Orakel-Transaktion in dem Transaktionsbuch nicht fehlerfrei ausgeführt werden kann oder mit einem anderen Ergebnis ausgeführt wird als bei Vorhandensein der Orakel-Transaktion in dem Transaktionsbuch, oder je nach von einer jeweiligen Instanz der Orakel-Transaktion umfassten Nutzdaten mit jeweils unterschiedlichem Ergebnis ausgeführt wird.

Unter "die Orakel-Transaktion referenzieren" ist insbesondere zu verstehen, dass der Smart Contract die von der ersten Einheit erlangte, aber noch nicht von der dritten Einheit bereitgestellte Orakel-Transaktion referenziert.

Unter einem "Ergebnis" des Smart Contracts ist beispielsweise eine von dem Smart Contract seinerseits in dem verteilten Datenbanksystem bereitgestellte Ergebnis-Transaktion, ihr Inhalt und dergleichen zu verstehen.

Gemäß einer Ausführungsform ist die zweite Einheit dazu eingerichtet, einen Programmcode des Smart Contracts zu analysieren, um zu ermitteln, ob der Smart Contract die Orakel-Transaktion referenziert.

Demgemäß kann vorteilhaft der Bedarf an der Orakel-Transaktion mittels Code-Analyse ermittelt werden, ohne den Smart Contract tatsächlich auszuführen oder den Zustand des Transaktionsbuchs des verteilten Datenbanksystems zu verändern.

Beispielsweise kann in dem verteilten Datenbanksystem eine Syntax vereinbart sein, gemäß derer ein jeweiliger Smart Contract, beispielsweise in einem Kopfbereich davon, deklariert, welche Orakel-Einrichtungen von ihm referenziert werden. Die zweite Einheit kann den Bedarf an der Orakel-Transaktion feststellen, wenn einer der Smart Contracts des Transaktionsbuchs die der vorgeschlagenen Einrichtung zugeordnete Orakel-Einrichtung referenziert.

Insbesondere bei Abwesenheit einer derartigen Syntax kann die zweite Einheit beispielsweise analysieren, welche Abschnitte des von dem Transaktionsbuch definierten Zustands der Smart Contract ausliest und/oder verarbeitet bzw. für Entscheidungen zur Ausführung von bedingten Anweisungsblöcken verwendet.

Gemäß einer weiteren Ausführungsform ist die zweite Einheit dazu eingerichtet, zu ermitteln, dass der Bedarf an der Orakel-Transaktion besteht, wenn in dem verteilten Datenbanksystem eine unbestätigte Transaktion bereitgestellt ist, die den Smart Contract umfasst oder referenziert, welcher die Orakel-Transaktion referenziert.

Demgemäß kann vorteilhaft selbst dann kein Bedarf an der Orakel-Transaktion festgestellt werden, wenn zwar das Transaktionsbuch den Smart Contract umfasst, der die Orakel-Transaktion referenziert, jedoch in dem verteilten Datenbanksystem keine unbestätigte (d.h. zu bestätigende) Transaktion bereitgestellt ist, die den Smart Contract referenziert.

Mit anderen Worten kann in einer Situation, in welcher zwar der Smart Contract, der die Orakel-Transaktion referenziert, in dem Transaktionsbuch des verteilten Datenbanksystems umfasst ist, dieser jedoch mindestens vorläufig nicht zur Ausführung kommt, weil keine unbestätigte Transaktion zu prüfen ist, die den Smart Contract referenziert, das Bereitstellen der Orakel-Transaktion vorteilhafterweise unterbleiben.

Da die zweite Einheit eine solche Situation erkennen kann, kann vorteilhaft die Transaktionslast des verteilten Datenbanksystems durch nicht benötigte Orakel-Transaktionen noch weiter gesenkt werden.

Gemäß einer weiteren Ausführungsform ist die zweite Einheit dazu eingerichtet, den Bedarf an der Orakel-Transaktion unter der Bedingung zu ermitteln, dass in dem Transaktionsbuch des verteilten Datenbanksystems jeder einer Anzahl von dem Smart Contract referenzierter Nicht-Orakel-Transaktionen bestätigt ist.

Demgemäß kann selbst in einer Situation, in der in dem Transaktionsbuch ein Smart Contract bestätigt bzw. umfasst ist, der die Orakel-Transaktion referenziert, das Bereitstellen der Orakel-Transaktion unterbleiben, sofern mindestens eine andere von dem Smart Contract referenzierte Nicht-Orakel-Transaktion nicht bestätigt ist.

Beispielsweise kann der Smart Contract neben der Orakel-Transaktion auch eine innerhalb des Transaktionsbuchs definierte Transaktion, wie etwa eine Kryptotoken-Transaktion oder eine Ergebnistransaktion eines weiteren Smart Contracts, referenzieren. Solange diese nicht bestätigt sind, könnte der Smart Contract sowieso nicht ausgeführt werden, daher kann auch kein Bedarf an der Orakel-Transaktion bestehen.

Da die zweite Einheit eine solche Situation erkennen kann, kann vorteilhaft die Transaktionslast des verteilten Datenbanksystems durch nicht benötigte Orakel-Transaktionen noch weiter gesenkt werden.

Gemäß einer weiteren Ausführungsform ist die erste Einheit dazu eingerichtet, die Orakel-Transaktion durch Empfangen von einer zu der Einrichtung externen Orakel-Einrichtung zu erlangen. Die dritte Einheit ist ferner dazu eingerichtet, die Orakel-Transaktion zu verwerfen, wenn in dem verteilten Datenbanksystem der Bedarf an der Orakel-Transaktion nicht besteht.

Anders ausgedrückt kann die vorgeschlagene Einrichtung gemäß der vorliegenden Ausführungsform als Filtereinrichtung ausgebildet sein, die von einer externen Orakel-Einrichtung bereitgestellte Orakel-Transaktionen nur dann durchlässt, wenn der Bedarf an der Orakel-Transaktion in dem verteilten Datenbanksystem ermittelt wurde.

Dies erlaubt vorteilhaft eine Kombination der vorgeschlagenen Lösung des bedarfsabhängigen Bereitstellens der Orakel-Transaktion mit einer vorhandenen, kommerziell verfügbaren Orakel-Einrichtung. Anders ausgedrückt sind vorteilhaft keine Änderungen an einer vorhandenen Orakel-Einrichtung erforderlich, um die vorgeschlagene Lösung zu implementieren.

Dies ist insbesondere deswegen vorteilhaft, da an Orakel-Einrichtungen sehr hohe Sicherheitsanforderungen gestellt werden, da eine manipulierte Orakel-Transaktion gegebenenfalls den Manipulationsschutz eines blockkettenbasierten verteilten Datenbanksystems bis zu einem gewissen Grade beeinträchtigen kann. Insofern können Änderungen an bewährten vorhandenen Orakel-Einrichtungen nicht wünschenswert sein.

Gemäß einer weiteren Ausführungsform ist die erste Einheit dazu eingerichtet, einen Orakel-Wert zu bestimmen und die Orakel-Transaktion durch Erzeugen der Orakel-Transaktion und Aufnehmen des Orakel-Wertes in die erzeugte Orakel-Transaktion zu erlangen, sofern in dem verteilten Datenbanksystem der Bedarf an der Orakel-Transaktion besteht.

Der "Orakel-Wert" bezeichnet hierbei insbesondere die vorstehend genannte Information über das Ereignis in der realen Welt, also beispielsweise eine Uhrzeit, einen Messwert und dergleichen.

Anders ausgedrückt handelt es sich also bei der vorgeschlagenen Einrichtung selbst um eine Orakel-Einrichtung, die dazu eingerichtet ist, eine Orakel-Transaktion zu erzeugen und diese bedarfsabhängig bereitzustellen.

Demgemäß kann vorteilhaft auch das Bestimmen des Orakel-Werts nur dann erfolgen, wenn der Bedarf an der Orakel-Transaktion in dem verteilten Datenbanksystem ermittelt wurde.

Gemäß einer weiteren Ausführungsform umfasst die vorgeschlagene Einrichtung einen Sensor und/oder ist kommunikativ mit einem Sensor gekoppelt, und die erste Einheit ist dazu eingerichtet, den Messwert des Sensors zu erhalten und als den Orakel-Wert der Orakel-Transaktion zu bestimmen.

Der Sensor kann insbesondere ein Sensor eines industriellen Automatisierungssystems sein.

Der Messwert des Sensors kann insbesondere ein physikalischer Messwert sein.

Somit kann vorteilhafterweise die Verwendung des verteilten Datenbanksystems als IT-Infrastrukturplattform zur Steuerung des industriellen Automatisierungssystems ermöglicht werden.

Anders ausgedrückt kann die Welt des Transaktionsbuchs vorteilhaft mit der realen, physikalischen Welt gekoppelt werden.

Gleichzeitig kann vorteilhaft gewährleistet werden, dass eine jeweilige Instanz der Orakel-Transaktion mit einem jeweiligen Orakel-Wert bzw. Messwert nicht in festen Zeittakten, sondern nur dann im Transaktionsbuch des verteilten Datenbanksystems bestätigt wird, wenn in dem verteilten Datenbanksystem der Bedarf an der Orakel-Transaktion tatsächlich besteht.

Gemäß einer weiteren Ausführungsform ist die zweite Einheit dazu eingerichtet, zu ermitteln, dass der Bedarf an der Orakel-Transaktion besteht, wenn in dem Transaktionsbuch des verteilten Datenbanksystems eine Orakel-Anforderungs-Transaktion bestätigt wird.

Demgemäß kann ein Smart Contract des verteilten Datenbanksystems seinen Bedarf an der Orakel-Transaktion explizit dadurch anzeigen, dass er die Orakel-Anforderungs-Transaktion in dem verteilten Datenbanksystem bereitstellt. Die vorgeschlagene Einrichtung kann vorteilhaft nur in Reaktion auf das Bestätigen einer jeweiligen Orakel-Anforderungs-Transaktion durch die Knoteneinrichtungen des verteilten Datenbanksystems eine jeweilige Orakel-Transaktion bereitstellen. Diese kann ihrerseits von den Knoteneinrichtungen des verteilten Datenbanksystems bestätigt werden. In Reaktion auf das Bestätigen der Orakel-Transaktion kann der Smart Contract fortfahren und zum Beispiel den in der Orakel-Transaktion umfassten Orakel-Wert verarbeiten, auswerten etc.

Demgemäß kann vorteilhafterweise auf Code-Analyse und dergleichen verzichtet werden und die Orakel-Transaktion besonders zuverlässig nur dann bereitgestellt werden, wenn tatsächlich der Bedarf an der Orakel-Transaktion besteht.

Die Nutzdaten der Orakel-Transaktion können beispielsweise in Form eines SQL-Statements, einer REST-Web-Service-Nachricht oder einer OPC-UA-Nachricht codiert sein.

Gemäß einer weiteren Ausführungsform ist die zweite Einheit dazu eingerichtet, zu ermitteln, dass der Bedarf an der Orakel-Transaktion besteht, wenn in dem verteilten Datenbanksystem eine unbestätigte Orakel-Anforderungs-Transaktion bereitgestellt wird.

Gemäß der vorliegenden Ausführungsform nimmt mindestens die zweite Einheit der vorgeschlagenen Einrichtung an dem Übermitteln von unbestätigten Transaktionen zwischen den Knoteneinrichtungen des verteilten Datenbanksystems teil. Die vorgeschlagene Einrichtung kann hierbei insbesondere selbst eine der Knoteneinrichtungen des verteilten Datenbanksystems sein.

Eine in dem verteilten Datenbanksystem bereitgestellte unbestätigte Orakel-Anforderungs-Transaktion antizipiert einen gegebenenfalls - sofern die unbestätigte Orakel-Anforderungs-Transaktion später gemäß Mehrheitskonsens in das Transaktionsbuch aufgenommen wird - künftig entstehenden Bedarf an der Orakel-Transaktion.

Somit kann die vorgeschlagene Einrichtung gemäß der vorliegenden Ausführungsform die Orakel-Transaktion schneller bereitstellen. Besonders vorteilhaft können sowohl die Orakel-Anforderungs-Transaktion als auch die in Reaktion darauf bereitgestellte Orakel-Transaktion in einem einzigen Block statt in zwei aufeinanderfolgenden Blöcken bestätigt werden.

Gemäß einer weiteren Ausführungsform ist die erste Einheit dazu eingerichtet, die Orakel-Transaktion in Reaktion auf das von der zweiten Einheit ermittelte Bereitstellen oder Bestätigen der Orakel-Anforderungs-Transaktion zu erlangen.

Demgemäß kann das Erlangen der Orakel-Transaktion, also insbesondere das des Orakel-Werts und/oder das Kommunizieren mit einer externen Orakel-Einrichtung, nur dann erfolgen, wenn in dem verteilten Datenbanksystem der Bedarf an der Orakel-Transaktion explizit mit der Orakel-Anforderungs-Transaktion angezeigt oder zumindest antizipiert worden ist.

Dies kann insbesondere dann vorteilhaft sein, wenn zum Erlangen der Orakel-Transaktion komplizierte und/oder kostspielige und/oder rechen- oder anderweitig ressourcenintensive Vorgänge durchzuführen sind, beispielsweise ein kompliziertes Messverfahren. Ein solcher mit dem Erlangen der Orakel-Transaktion verbundener Aufwand fällt somit vorteilhafterweise nur an, wenn der Bedarf explizit angezeigt oder antizipiert wurde.

Gemäß einer weiteren Ausführungsform ist die zweite Einheit dazu eingerichtet, basierend auf einem in der Orakel-Anforderungs-Transaktion enthaltenen Steuerbefehl eine Steueraktion zu veranlassen.

Das Veranlassen der Steueraktion kann insbesondere ein Ausgeben eines Steuerbefehls an einen Aktor eines industriellen Automatisierungssystems umfassen.

Die vorgeschlagene Einrichtung kann den Aktor umfassen oder kommunikativ mit dem Aktor verbunden sein.

Beispielsweise kann somit durch einen Smart Contract ein vorgegebener Zustand in dem industriellen Automatisierungssystem hergestellt werden, bevor der Orakel-Wert der bereitzustellenden Orakel-Transaktion erlangt, wie z.B. gemessen, wird.

Somit kann vorteilhafterweise die Verwendung des zentralen Datenbanksystems als IT-Infrastrukturplattform zur Steuerung des industriellen Automatisierungssystems ermöglicht werden.

Gemäß einer weiteren Ausführungsform umfasst der Orakel-Wert der Orakel-Transaktion eine Bestätigungsinformation über ein Ergebnis des Durchführens der veranlassten Steueraktion.

Die Bestätigungsinformation kann beispielsweise einen Ergebniswert wie "OK" oder "Fehler" umfassen und/oder eine Information darüber, ob der durch den Steuerbefehl herzustellende Zustand tatsächlich erreicht wurde.

Somit kann vorteilhafterweise die Verwendung des zentralen Datenbanksystems als IT-Infrastrukturplattform zur Steuerung des industriellen Automatisierungssystems ermöglicht werden.

Gemäß einem zweiten Aspekt wird ein Verfahren zum Bereitstellen einer Orakel-Transaktion in einem verteilten Datenbanksystem mit einem Transaktionsbuch vorgeschlagen. Das Verfahren umfasst: Erlangen der Orakel-Transaktion; Ermitteln, ob in dem verteilten Datenbanksystem ein Bedarf an der Orakel-Transaktion besteht; und Bereitstellen der Orakel-Transaktion in dem verteilten Datenbanksystem nur unter der Bedingung, dass in dem verteilten Datenbanksystem der Bedarf an der Orakel-Transaktion besteht.

Die für die vorgeschlagene Einrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Nähere Einzelheiten und weitere Varianten von auf Blockketten-Technologie basierenden verteilten Datenbanksystemen, auf die die vorgeschlagene Blockbildungs-Einrichtung, die vorgeschlagene Knoteneinrichtung und die vorgeschlagenen Verfahren anwendbar sind, werden im Folgenden erläutert.

Sofern es in der nachstehenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module oder anderer Aspekte und/oder Teilaspekte der Erfindung realisiert.

Unter einer "Speichereinheit", einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hash-Wert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hash-Wert/e eines Hash-Baumes (z. B. Merkle-Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten (sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle-Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hash-Baumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann zum Beispiel ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten, Messwerte, Steuerwerte, oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktion abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Anders gesagt kann insbesondere unter "sicherheitsgeschützt" im Zusammenhang mit der Erfindung auch "kryptographisch geschützt" und/oder "manipulationsgeschützt" verstanden werden. Dabei kann "manipulationsgeschützt" auch als "integritätsgeschützt" bezeichnet werden.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Blockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird zum Beispiel eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work" oder "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer-Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensregeln bzw. Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich, rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blockkette oder eine Peer-to-Peer-Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work-Nachweis und eine Nonce (Einmalwert, Zufallswert oder Zähler, der für den Proof-of-Work-Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehende Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems", "Knoteneinrichtung" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder Ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen implementiert ist (z. B. Tamper-Schutz oder ein Schutzsystem, das die Daten des Sicherheitsmoduls bei einer unzulässigen Nutzung/Behandlung des Blockketten-Orakels löscht). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart Contracts erfolgen, der insbesondere in einer Transaktion des verteilten Datenbanksystems gespeichert ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Diagramm einer Bereitstellungseinrichtung gemäß einem Ausführungsbeispiel.
Fig. 2 veranschaulicht ein Verfahren zum Bereitstellen einer Orakel-Transaktion gemäß dem ersten Ausführungsbeispiel.
Fig. 3 veranschaulicht eine bevorzugte Ausgestaltung eines verteilten Datenbanksystems.
Fig. 4 zeigt eine Ausgestaltung der Bereitstellungseinrichtung gemäß einer ersten Variante des Ausführungsbeispiels.
Fig. 5 zeigt eine Ausgestaltung der Bereitstellungseinrichtung gemäß einer zweiten Variante des Ausführungsbeispiels.
Fig. 6 zeigt eine Ausgestaltung der Bereitstellungseinrichtung gemäß einer dritten Variante des Ausführungsbeispiels.
Fig. 7 zeigt eine Ausgestaltung der Bereitstellungseinrichtung gemäß einer vierten Variante des Ausführungsbeispiels.
Fig. 8 veranschaulicht beispielhaft einen möglichen vorteilhaften Aufbau eines Blocks des verteilten Datenbanksystems.
Fig. 9 zeigt ein Transaktionsbuch des verteilten Datenbanksystems bei Verwendung der Bereitstellungseinrichtung gemäß einer fünften Variante des Ausführungsbeispiels.
Fig. 10 zeigt ein Transaktionsbuch des verteilten Datenbanksystems bei Verwendung der Bereitstellungseinrichtung gemäß einer sechsten Variante des Ausführungsbeispiels.
Fig. 11 zeigt ein Transaktionsbuch des verteilten Datenbanksystems bei Verwendung der Bereitstellungseinrichtung gemäß einer siebten Variante des Ausführungsbeispiels.
Fig. 12 zeigt ein Transaktionsbuch des verteilten Datenbanksystems bei Verwendung der Bereitstellungseinrichtung gemäß einer achten Variante des Ausführungsbeispiels.

In den Figuren sind gleiche oder funktionsgleiche Elemente mit denselben Bezugszeichen versehen worden, sofern nichts anderes angegeben ist.

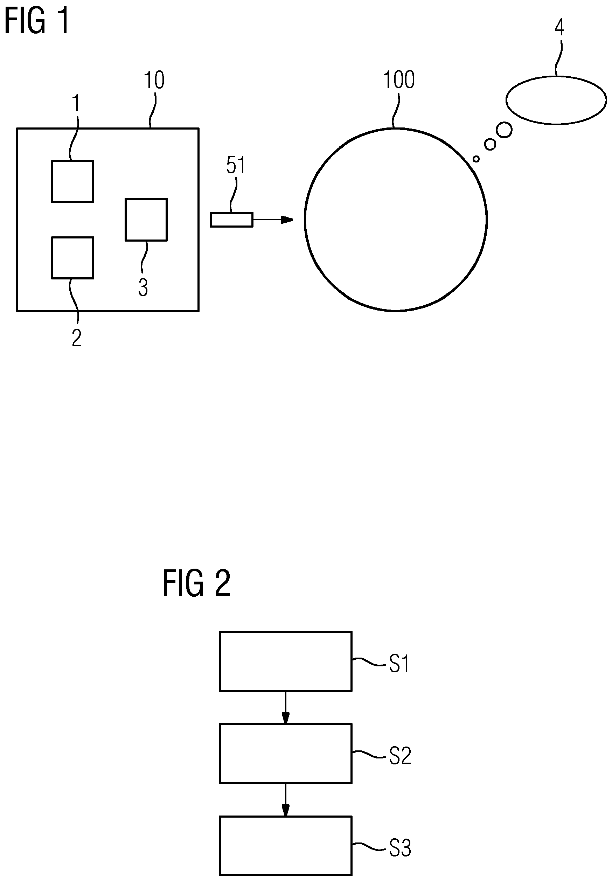

Fig. 1 zeigt ein schematisches Diagramm mit einer Bereitstellungseinrichtung 10 und einem verteilten Datenbanksystem 100 gemäß einem ersten Ausführungsbeispiel.

Die in Fig. 1 gezeigte Einheit 10 zum Bereitstellen einer Orakel-Transaktion in einem verteilten Datenbanksystem 100 (im Weiteren "Bereitstellungseinrichtung 10") umfasst eine erste Einheit 1, eine zweite Einheit 2 und eine dritte Einheit 3.

Ebenfalls in Fig. 1 schematisch gezeigt ist das verteilte Datenbanksystem 100, das ein darin gespeichertes Transaktionsbuch 4 verwaltet. Fig. 1 veranschaulicht ferner, dass die Bereitstellungseinrichtung 10 eine Orakel-Transaktion 51 an die Bereitstellungseinrichtung 10 bereitstellt. Dieses Bereitstellen erfolgt unter der Bedingung, dass in dem Datenbanksystem 100 ein Bedarf an der Orakel-Transaktion 51 ermittelt wurde.

Fig. 2 zeigt ein Verfahren zum Bereitstellen der Orakel-Transaktion 51 gemäß dem ersten Ausführungsbeispiel. Es wird auf Fig. 2 und Fig. 1 Bezug genommen.

In Schritt S1 erlangt die erste Einheit 1 die Orakel-Transaktion 51.

In Schritt S2 ermittelt die zweite Einheit 2, ob in dem verteilten Datenbanksystem 100 ein Bedarf an der Orakel-Transaktion 51 besteht.

Nur falls der Bedarf an der Orakel-Transaktion 51 in dem verteilten Datenbanksystem 100 besteht, stellt in Schritt S3 die dritte Einheit 3 die Orakel-Transaktion 51 in dem verteilten Datenbanksystem 100 bereit.

Insbesondere kann das verteilte Datenbanksystem 100 in Reaktion auf das Bereitstellen der Orakel-Transaktion 51 die bereitgestellte Orakel-Transaktion 51 in dem Transaktionsbuch 4 bestätigen.

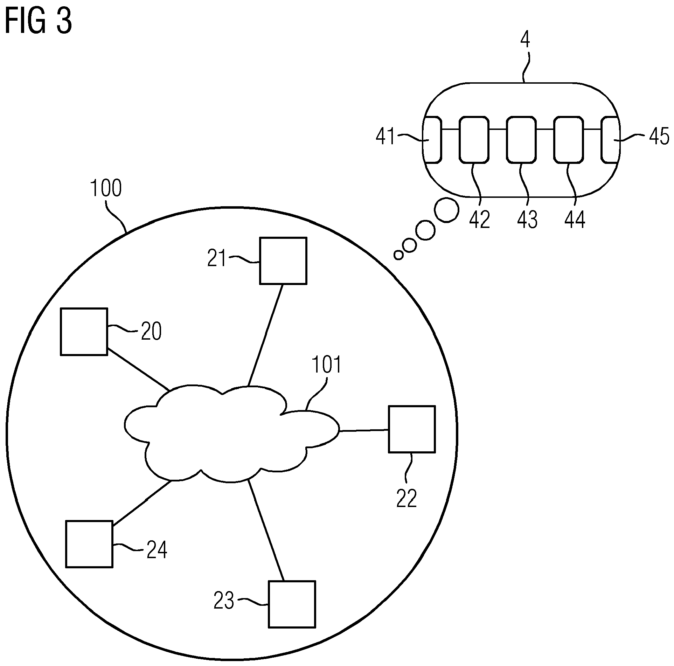

Fig. 3 veranschaulicht eine bevorzugte Ausgestaltung des verteilten Datenbanksystems 100.

Das verteilte Datenbanksystem 1 verwaltet ein aus einer Anzahl verketteter Blöcke 41-45 gebildetes Transaktionsbuch 4. Das verteilte Datenbanksystem 1 umfasst eine Anzahl Knoteneinrichtungen 20-24, die mittels eines Netzwerks 101 miteinander vernetzt sind.

Insbesondere speichert eine jeweilige Knoteneinrichtung 20-24 eine jeweilige Repräsentation des Transaktionsbuchs 4, und eine Konsensregel des verteilten Datenbanksystems 1, die von den Knoteneinrichtungen 20-24 implementiert wird, kann dafür sorgen, dass in einer Mehrzahl der und bevorzugt in allen der Knoteneinrichtungen 20-24 die gleiche Repräsentation des Transaktionsbuchs 4 gespeichert ist.

Beispielsweise können Transaktionen, wie die Orakel-Transaktion 51 (Fig. 1) und/oder unbestätigte Blöcke (nicht gezeigt), in dem verteilten Datenbanksystem 1 derart bereitgestellt werden, dass mehrere, bevorzugt alle, der Knoteneinrichtungen 20-24 diese auf direktem, indirekten Wege oder mittels Peer-to-Peer-Kommunikation empfangen.

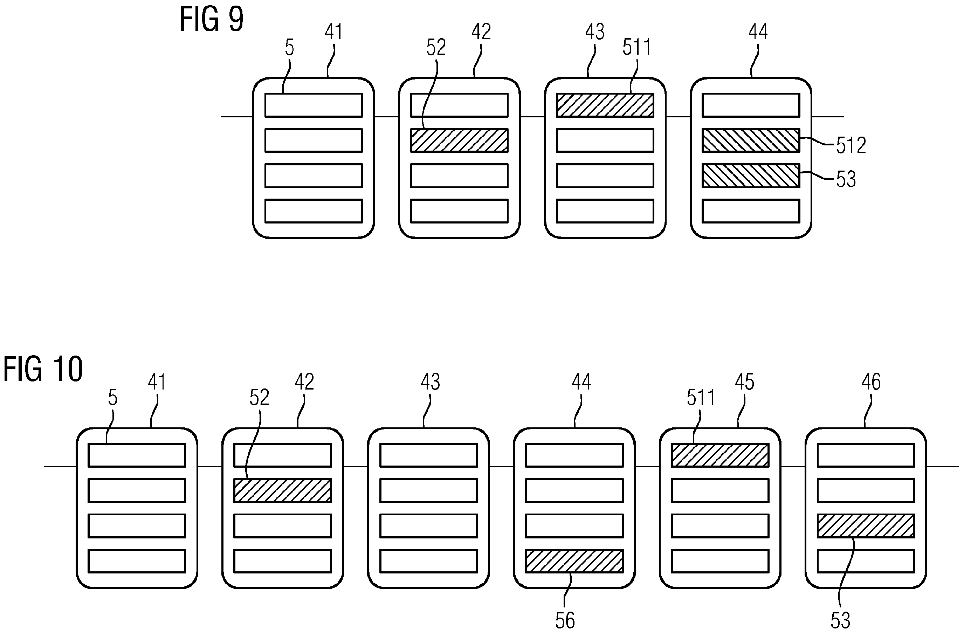

Wird in dem verteilten Datenbanksystem 100 eine unbestätigte Transaktion, wie die Orakel-Transaktion 51 (Fig. 1), eine Kryptotoken-Transaktion 56 (Fig. 9 - 12) oder ein Smart Contract 52 (Fig. 9 - 12) bereitgestellt, so kann diese insbesondere durch eine Anzahl blockbildender Knoteneinrichtungen der Knoteneinrichtungen 20-24 geprüft werden. Ist die bereitgestellte unbestätigte Transaktion gültig, kann die jeweilige blockbildende Knoteneinrichtung 20-24 sie in einen von ihr gebildeten unbestätigten Block (in Fig. 3 nicht gezeigt) aufnehmen, den unbestätigten Block mit der in der blockbildenden Knoteneinrichtung gespeicherten Repräsentation des Transaktionsbuchs 4 verketten, und den unbestätigten Block, wie vorstehend beschrieben, in dem verteilten Datenbanksystem 100 bereitstellen.

Die übrigen der Knoteneinrichtungen 20-24 prüfen insbesondere den von der jeweiligen blockbildenden Knoteneinrichtung 20-24 bereitgestellten Block. Wenn der bereitgestellte Block der Konsensregel des verteilten Datenbanksystems 100 entspricht, verkettet die jeweilige der übrigen Knoteneinrichtungen 20-24 den bereitgestellten unbestätigten Block mit der darin gespeicherten Repräsentation des Transaktionsbuchs 4.

Die Konsensregel des verteilten Datenbanksystems 100 kann derart eingerichtet sein, dass sich in dem verteilten Datenbanksystem 100 ein Mehrheitskonsens über eine gemeinsam als gültig betrachtete Konsensversion des Transaktionsbuchs 4 herausbildet, ohne, dass eine zentrale Clearing-Stelle oder eine Zugangskontrolle zu dem Netzwerk 101 erforderlich ist. Insbesondere kann eine Mehrheit von legitim betriebenen Knoteneinrichtungen 20-24 Manipulationsversuchen durch eine Minderheit von böswillig agierenden Knoteneinrichtungen 20-24 dadurch widerstehen, dass zwischen den Knoteneinrichtungen 20-24 ein Mehrheitskonsens über die gültige Konsensversion des Transaktionsbuchs 4 gebildet wird.

Insofern wird die in einer jeweiligen der Knoteneinrichtungen 20-24 gespeicherte Repräsentation des Transaktionsbuchs 4 auch als Konsensversion des Transaktionsbuchs 4 bezeichnet.

Wird der unbestätigte Block als neuer bestätigter Block 45 mit der in den Knoteneinrichtungen 20-24 jeweils gespeicherten Konsensversion des Transaktionsbuchs 4 verkettet, gelten hierdurch alle in dem neuen bestätigten Block 45 umfassten Transaktionen 5 (Fig. 9-12) als in dem Transaktionsbuch 4 bestätigt.

Das geschilderte Bestätigen einer Transaktion kann aufwendig sein. Insbesondere kann es, um der Konsensregel zu genügen und den Manipulationsschutz zu gewährleisten, erforderlich sein, zum Bilden eines gültigen Blocks 41-45, der an das Transaktionsbuch 4 anfügbar (damit verkettbar) ist, eine vordefinierte Menge an Ressourcen - wie geleistete Rechenzeit, bereitgestellter Speicherplatz, vorgehaltene Kryptotoken etc. - aufzuwenden.

Aus diesem Grund ist es wünschenswert, nur tatsächlich benötigte Transaktionen in dem Transaktionsbuch 4 zu bestätigen.

Die Bereitstellungseinrichtung 10 (Fig. 1) kann daher vorteilhaft die für den Betrieb des verteilten Datenbanksystems 100 aufzuwendende Ressourcenmenge dadurch reduzieren, dass sie die Orakel-Transaktion 51 (Fig. 1), bzw. eine jeweilige Instanz der Orakel-Transaktion 51 (Fig. 1), nur dann zum Bestätigen durch das verteilte Datenbanksystem 100 bereitstellt, wenn in dem verteilten Datenbanksystem 100 Bedarf an der Orakel-Transaktion 51 (Fig. 1) besteht.

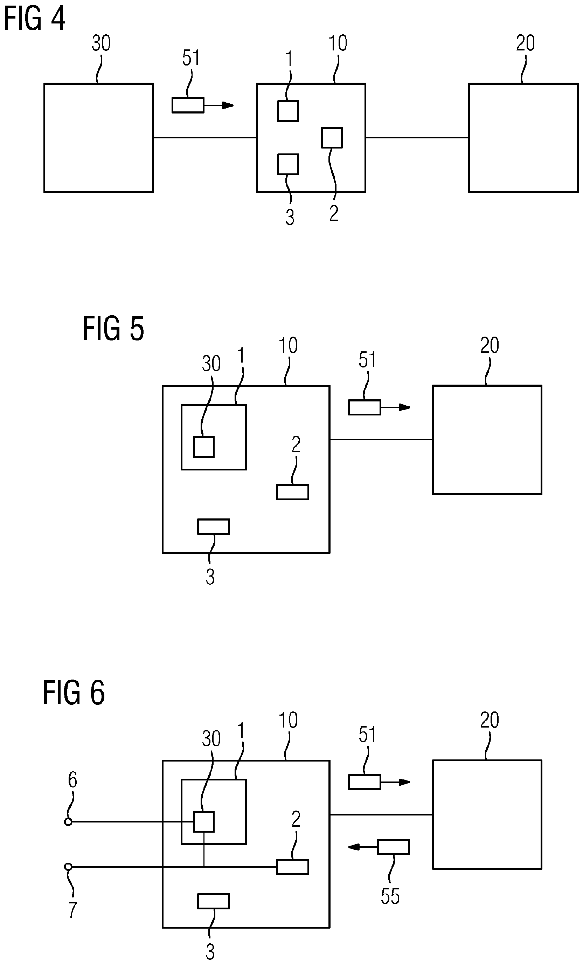

Anhand der Fig. 4 bis Fig. 7 werden nun Varianten der Bereitstellungseinrichtung 10 gemäß dem Ausführungsbeispiel beschreiben, wobei jeweils auch Rückbezug auf Fig. 3 genommen wird.

Fig. 4 zeigt eine Ausgestaltung der Bereitstellungseinrichtung 10 gemäß einer ersten Variante des Ausführungsbeispiels.

Speziell zeigt Fig. 4 eine Anordnung aus einer Orakel-Einrichtung 30, der Bereitstellungseinrichtung 10 und einer Knoteneinrichtung 20, die stellvertretend für eine beliebige der Knoteneinrichtungen 20-24 des verteilten Datenbanksystems 100 steht.

Die Orakel-Einrichtung 30 aus Fig. 4 ist dazu eingerichtet, periodisch in einem vorgegebenen Zeittakt und/oder bei einem jeweiligen Auftreten eines Ereignisses in der realen Welt die Orakel-Transaktion 51 (eine jeweilige Instanz der Orakel-Transaktion 51) bereitzustellen.

Beispielsweise kann einmal pro Sekunde eine jeweilige Instanz der Orakel-Transaktion 51 bereitgestellt werden, welche als Orakelwert einen jeweiligen Messwert, eine Uhrzeit oder dergleichen umfasst, oder eine jeweilige Instanz der Orakel-Transaktion 51 kann immer dann bereitgestellt werden, wenn immer ein neuer Messwert gemessen wird.

Die Orakel-Einrichtung 30 dient dazu, dem Transaktionsbuch 4 des verteilten Datenbanksystems 100 (insbesondere einem darin bestätigten Smart Contract 52, Fig. 9 - 12) mittels der Orakel-Transaktion 51, die in dem Transaktionsbuch 4 bestätigbar ist, Zugriff auf Informationen über die reale Welt, wie den Messwert oder die Uhrzeit, zu verschaffen.

Die Bereitstellungseinrichtung 10 in Fig. 4 ist kommunikativ mit der Orakel-Einrichtung 30 und der Knoteneinrichtung 20 verbunden. Die erste Einheit 1 der Bereitstellungseinrichtung 10 empfängt die jeweilige Instanz der Orakel-Transaktion 51 von der Orakel-Einrichtung 30. Wenn die erste Einheit 1 die Orakel-Transaktion 51 empfängt, ermittelt die zweite Einheit 2, ob in dem verteilten Datenbanksystem 100 ein Bedarf an der Orakel-Transaktion 51 besteht. Besteht der Bedarf nicht, verwirft die dritte Einheit 3 die Orakel-Transaktion 51. Besteht der Bedarf, übermittelt die dritte Einheit die Orakel-Transaktion 51 an die Knoteneinrichtung 20, um sie in dem verteilten Datenbanksystem 100 bereitzustellen.

Insbesondere kann die zweite Einheit 2 für das Ermitteln des Bedarfs mit der Knoteneinrichtung 20 kommunizieren. Insbesondere kann die Knoteneinrichtung 20 der zweiten Einheit 2 Lesezugriff auf das Transaktionsbuch 4 des verteilten Datenbanksystems 100 gewähren. Die zweite Einheit 2 kann den Bedarf beispielsweise abhängig davon ermitteln, ob in dem Transaktionsbuch 4 eine Transaktion, wie beispielsweise ein Smart Contract, bestätigt ist, welche/welcher die Orakel-Transaktion 51 referenziert.

Man kann somit sagen, dass die Bereitstellungseinrichtung 10 aus Fig. 4 eine Filterkomponente ist, die zwischen die Orakel-Einrichtung 10 und die Knoteneinrichtung 20 geschaltet ist und die Orakel-Transaktion 51 bedarfsabhängig entweder bereitstellt oder ausfiltert.

Fig. 5 zeigt eine Ausgestaltung der Bereitstellungseinrichtung 10 gemäß einer zweiten Variante des Ausführungsbeispiels.

Gemäß der zweiten Variante ist die Orakel-Einrichtung 30 nicht extern zu der Bereitstellungseinrichtung 10, sondern ist Teil der Bereitstellungseinrichtung 10. Im Speziellen ist die Orakel-Einrichtung 30 Teil der ersten Einheit 1 der Bereitstellungseinrichtung 10. Andres ausgedrückt ist die erste Einheit 1 dazu einrichtet, selbst einen Orakel-Wert, wie den Messwert oder die aktuelle Uhrzeit, zu bestimmen und die Orakel-Transaktion 51 zu erzeugen, welche den bestimmten Orakel-Wert umfasst.

Insbesondere bestimmt die erste Einheit 1 den Orakel-Wert nur in Reaktion darauf, dass die zweite Einheit 2 den Bedarf an der Orakel-Transaktion 51 in dem verteilten Datenbanksystem 100 ermittelt hat.

Somit kann beispielsweise ein Messvorgang zum Bestimmen des Orakel-Werts sowie das Erzeugen der Orakel-Transaktion 51 vorteilhaft von vornherein unterbleiben, wenn der Bedarf nicht besteht.

Fig. 6 zeigt eine Ausgestaltung der Bereitstellungseinrichtung 10 gemäß einer dritten Variante des Ausführungsbeispiels.

Die Anordnung aus Fig. 6 weist gegenüber der Anordnung aus Fig. 5 zusätzlich einen Sensor 6 und einen Aktor 7 eines industriellen Automatisierungssystems (nicht gezeigt) auf. Der Sensor 6 ist kommunikativ mit der ersten Einheit 1 (Orakel-Einrichtung 30) verbunden. Der Aktor 7 ist kommunikativ mit der zweiten Einheit 2 und der ersten Einheit 1 verbunden.

Die zweite Einheit 2 ermittelt den Bedarf des verteilten Datenbanksystems 100 an der Orakel-Transaktion 51 anhand einer in dem Transaktionsbuch 4 bestätigten Orakel-Anforderungs-Transaktion 55. Die Orakel-Anforderungs-Transaktion 55 kann zum Beispiel von einem ebenfalls in dem Transaktionsbuchs 4 bestätigten Smart Contract erzeugt worden sein, der damit anzeigt, dass für seine Ausführung Kenntnis eines Orakel-Werts erforderlich ist. Die zweite Einheit 2 kann von der Knoteneinrichtung 20 über das Bestätigen der Orakel-Anforderungs-Transaktion 55 benachrichtigt werden, oder die zweite Einheit 2 kann von der Knoteneinrichtung 20 mindestens einen Abschnitt des Transaktionsbuchs 4 (Fig. 3) einlesen und die in einem der Blöcke 41-45 des Transaktionsbuchs 4 umfasste bestätigte Orakel-Anforderungs-Transaktion 55 erkennen. Die Orakel-Anforderungs-Transaktion 55 kann beispielsweise eine Referenz auf oder eine Kennung der Bestätigungseinrichtung 10 und/oder der Orakel-Einrichtung 30 umfassen, um auf diese Weise den Bedarf an der von der Orakel-Einrichtung 30 erzeugten Orakel-Transaktion 51, bzw. den Bedarf am Bereitstellen einer weiteren Instanz der Orakel-Transaktion 51, anzuzeigen.

In Reaktion auf das Ermitteln des Bedarfs durch die zweite Einheit 2 ruft die Orakel-Einrichtung 30 der ersten Einheit 1 einen Messwert des Sensors 6 ab, erstellt die Orakel-Transaktion 51 und bestimmt oder verwendet dabei den erhaltenen Messwert als den Orakel-Wert der erstellten Orakel-Transaktion 51. Die dritte Einheit 3 übermittelt die erstellte Orakel-Transaktion 51 mit dem Messwert als dem Orakel-Wert an die Knoteneinrichtung 20, um sie in dem verteilten Datenbanksystem 100 bereitzustellen.

Somit können Smart Contracts des verteilten Datenbanksystems 100 auf Grundlage von Messwerten in einem industriellen Automatisierungssystem operieren. Beispielsweise könnte ein solcher Smart Contract eine Vergütung an einen Betreiber des industriellen Automatisierungssystems nur dann auszahlen, wenn basierend auf den mittels der Orakel-Einrichtung 30 und der Bereitstellungseinrichtung 10 ermittelten Messwerten ermittelt wird, dass das industrielle Automatisierungssystem mit hinreichender Servicegüte betrieben wurde.

Gemäß einer Weiterbildung der dritten Variante kann die Orakel-Anforderungs-Transaktion 55 ferner einen Steuerbefehl umfassen. Der Steuerbefehl kann einen Steuerwert umfassen. Empfängt bzw. erlangt die zweite Einheit Kenntnis von einer an die Bereitstellungseinrichtung 10 bzw. die Orakel-Einrichtung 30 gerichteten (diese referenzierenden) Orakel-Anforderungs-Transaktion 55, veranlasst die zweite Einheit eine Steueraktion, indem sie den Steuerwert aus der Orakel-Anforderungs-Transaktion 55 an den Aktor 7 des industriellen Automatisierungssystems übermittelt.

Beispielsweise übermittelt im Anschluss an das Übermitteln des Steuerwerts an den Aktor 7 durch die zweite Einheit 2 der Aktor 7 eine Bestätigungsinformation, z.B. über erfolgreiches oder fehlgeschlagenes Durchführen der Steueraktion, an die erste Einheit 1. Die Orakel-Einrichtung 30 der ersten Einheit 1 verwendet die übermittelte Bestätigungsinformation als den Orakel-Wert der von ihr erzeugten Orakel-Transaktion 30.

Auf diese Weise kann einem Smart Contract des verteilten Datenbanksystems 100 die Fähigkeit verliehen werden, durch das Erzeugen der Orakel-Anforderungs-Transaktionen 55 das industrielle Automatisierungssystem transparent und nachvollziehbar zu steuern.

Alternativ hierzu wartet beispielsweise die Bereitstellungseinrichtung 10, nachdem die zweite Einheit 2 den Steuerwert an den Aktor 7 übermittelt hat, eine Zeitspanne ab, die vordefiniert oder von dem Steuerbefehl definiert oder durch eine von dem Aktor 7 übermittelte Bestätigungsinformation definiert sein kann. Erst nach Ablauf der Zeitspanne veranlasst sie die erste Einheit 1 dazu, die Orakel-Transaktion 51 zu erlangen. Auf diese Weise kann vor dem Bestimmen des Orakel-Werts durch Messung mit Hilfe des Sensors 6 zunächst durch die von dem Aktor 7 implementierte Steueraktion ein von dem Steuerbefehl definierter Zustand in dem industriellen Automatisierungssystem hergestellt werden.

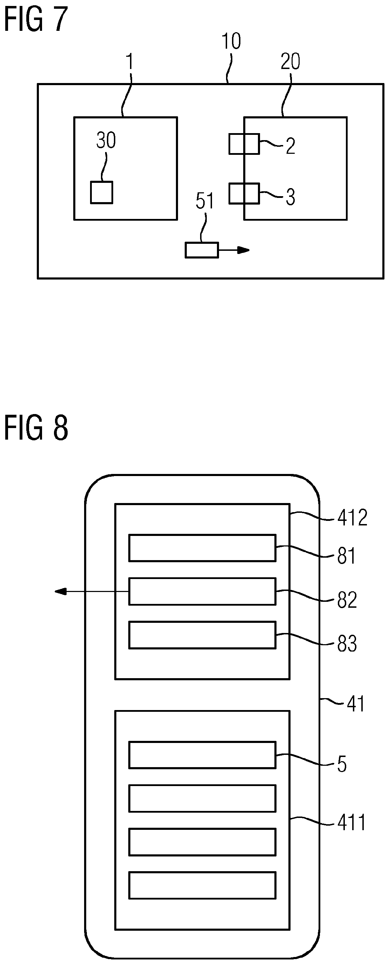

Fig. 7 zeigt eine Ausgestaltung der Bereitstellungseinrichtung 10 gemäß einer vierten Variante des Ausführungsbeispiels.

Die Bereitstellungseinrichtung 10 gemäß der vierten Variante umfasst die Knoteneinrichtung 20 des verteilten Datenbanksystems 100. Funktionalität der zweiten Einheit 2 zum Ermitteln des Bedarfs an der und Funktionalität der dritten Einheit 3 zum Bereitstellen der Orakel-Transaktion 51 (Fig. 4-6) kann mindestens teilweise durch Funktionalität der Knoteneinrichtung 20 realisiert sein.

Demgemäß kann die zweite Einheit 2 den Bedarf an der Orakel-Transaktion 51 nicht allein anhand von in dem Transaktionsbuch 4 des verteilten Datenbanksystems 100 bestätigten Transaktionen ermitteln. Vielmehr werden an die Knoteneinrichtung 20, die Teil des Datenbanksystems 100 ist, auch in dem Datenbanksystem 100 bereitgestellte unbestätigte Transaktionen bereitgestellt, noch bevor diese in dem Transaktionsbuch 4 bestätigt werden. Somit kann die zweite Einheit 2 den Bedarf an der Orakel-Transaktion 51 vorteilhaft ermitteln bereits in Reaktion auf das Bereitstellen einer noch unbestätigten Transaktion in dem verteilten Datenbanksystem 100 ermitteln.

Die noch unbestätigte Transaktion kann einen Smart Contract umfasst oder referenzieren, der die Orakel-Transaktion 51 referenziert bzw. zu seiner Ausführung benötigt. Anders ausgedrückt kann die noch unbestätigte Transaktion eine Transaktion sein, die nur dann bestätigt werden kann, wenn dem verteilten Datenbanksystem 100 eine weitere Instanz der Orakel-Transaktion 51 bereitgestellt wird.

Desgleichen kann die erste Einheit 1 bereits in Reaktion auf das Bereitstellen der noch unbestätigten Orakel-Anforderungs-Transaktion 55 (Fig. 5) die Orakel-Transaktion 51 von der Orakel-Einrichtung 30 erlangen.

Somit kann vorteilhaft der Bedarf an der Orakel-Transaktion 51 frühzeitig antizipiert werden. Die Orakel-Transaktion 51 kann daher vorteilhaft mit verkürzter Reaktionszeit, und besonders bevorzugt sofort bei Eintreten des Bedarfs, bereitgestellt werden.

Es sei angemerkt, dass Fig. 7 die Orakel-Einrichtung 30 als Teil der ersten Einheit 1 der Bereitstellungseinrichtung 10 zeigt. Denkbar ist jedoch auch eine Variante, dass die Bereitstellungseinrichtung 10 zwar, wie in Fig. 7 gezeigt, die Knoteneinrichtung 20 umfasst, die Orakel-Einrichtung 30 jedoch, wie in Fig. 4 gezeigt, extern zu der Bereitstellungseinrichtung 10 bereitgestellt ist.

Fig. 8 veranschaulicht beispielhaft einen möglichen vorteilhaften Aufbau eines Blocks 41 des verteilten Datenbanksystems 100. Die Beschreibung erfolgt unter Rückbezug auf Fig. 3.

Es versteht sich, dass die übrigen Blöcke 42-45 des verteilten Datenbanksystems 100 gleichartig wie der Block 41 aufgebaut sein können.

Der Block 41 umfasst einen Kopfdatenabschnitt 412 und einen Nutzdatenabschnitt 411.

Der Nutzdatenabschnitt 411 umfasst eine Anzahl Transaktionen, wovon eine Transaktion beispielhaft mit 5 bezeichnet ist.

Der Kopfdatenabschnitt 412 umfasst eine Datenblockprüfsumme 83, die beispielsweise ein Merkle-Root (Wurzelwert eines kryptographischen Hash-Baums) ist und die Transaktionen 5 gegen nachträgliche Manipulationen schützt.

Der Kopfdatenabschnitt 412 umfasst ferner einen Verkettungs-Hashwert 82, welcher ein kryptographischer Hash-Wert des dem Block 41 in dem Transaktionsbuch 4 vorangehenden Blocks (nicht gezeigt) der Anzahl verketteter Blöcke 41-45 des Transaktionsbuchs 4 ist. Auf diese Weise kann die gesamte Kette von Blöcken 41-45 gegen nachträgliche Manipulationen geschützt werden.

Der Kopfdatenabschnitt 412 umfasst außerdem einen Nachweiswert 83, der nachweisbar ein berechtigtes Interesse derjenigen der Knoteneinrichtungen 20-24, die den Block 41 gebildet hat, am reibungslosen Betrieb des verteilten Datenbanknetzwerks 100 (Fig. 3) dokumentiert. Anders ausgedrückt dokumentiert der Nachweiswert 38 nachvollziehbar, dass zum Erzeugen des Blocks 41 eine vordefinierte Menge an Ressourcen - wie geleistete Rechenzeit, bereitgestellter Speicherplatz, vorgehaltene Kryptotoken etc. - aufgewendet worden sind. Bei dem Nachweiswert 83 kann es sich beispielsweise um einen Proof-of-Work, einen Proof-of-Stake, einen Best-Effort-Proof-of-Work oder Proof-of-Quality, eine Signatur eines Mitglieds eines Privileged Ledger und dergleichen handeln.

Die Konsensregel des verteilten Datenbanksystems 100 kann fordern, dass ein unbestätigter Block (nicht gezeigt) einen gültigen Nachweiswert 81 enthalten soll, damit er von den Knoteneinrichtungen Knoteneinrichtung 20-24 des verteilten Datenbanksystems 1 erfolgreich bestätigt werden kann. Hierdurch wird das Bilden eines korrekten, der Konsensregel entsprechenden Blocks 61-63 erschwert bzw. ressourcenaufwendiger oder teurer gemacht. Dies kann dem Manipulationsschutz dienen, da ein nachträgliches Verändern des Transaktionsbuchs 4 nicht nur ein Neuberechnen der Prüfsummen 83, 82 eines jeden der Blöcke 41-45, sondern auch ein erneutes ressourcenaufwendiges Bestimmen veränderter Nachweiswerte 81 eines jeweiligen der Blöcke 41-45 erforderlich machen würde.

Anhand der Fig. 9 bis 12 werden nachstehend Effekte von Varianten des Ausführungsbeispiels anhand von Zuständen des Transaktionsbuchs 4 (Fig. 3) des verteilten Datenbanksystems 100 (Fig. 3) beschreiben. Die Beschreibung der Fig 9 bis 12 erfolgt jeweils auch unter Rückbezug auf Fig. 3 und Fig. 1.

Fig. 9 bis Fig. 12 zeigen jeweils einen möglichen Zustand das Transaktionsbuch 4 gemäß einer jeweiligen Variante des Ausführungsbeispiels. Hierbei sind Blöcke 41-47 als Rechtecke mit abgerundeten Ecken und von den Blöcken 41-47 umfasste Transaktionen als Rechtecke mit spitzen Ecken dargestellt. Eine der Transaktionen ist beispielhaft mit dem Bezugszeichen 5 bezeichnet. Gesonderte, nachfolgend näher beschriebene der Transaktionen 5 tragen darüber hinaus ein gesondertes Bezugszeichen.

Es versteht sich, dass die in Fig. 9 bis Fig. 12 gezeigten Blöcke 41-46 jeweils zeitlich nacheinander von links nach rechts in dem jeweiligen Transaktionsbuch 4 bestätigt worden sind. Insofern lässt sich anhand des jeweiligen Transaktionsbuchs 4 nachträglich nachvollziehen, welche Vorgänge in dem verteilten Datenbanksystem 100 nacheinander abgelaufen sind.

Fig. 9 zeigt ein Transaktionsbuch 4 des verteilten Datenbanksystems 100 bei Verwendung der Bereitstellungseinrichtung 10 gemäß einer fünften Variante des Ausführungsbeispiels.

Das in Fig. 9 gezeigte Transaktionsbuch 4 ist aus vier Blöcken 41 bis 44 gebildet.

Der erste Datenblock 41 enthält vier bestätigte Transaktionen 5, bei denen es sich etwa um Kryptotoken-Transaktionen, Smart Contracts, die keine Orakel-Werte verarbeiten, Mess- und Steuerdaten-Transaktionen und dergleichen handeln kann. Insbesondere ist in dem ersten Datenblock 41 keine Orakel-Transaktion bestätigt.

Im zweiten Datenblock 42 ist in dem Transaktionsbuch 4 eine Transaktion 52 bestätigt, die einen Smart Contract umfasst (im Folgenden "Smart Contract 52"), der die Orakel-Transaktion 51 referenziert. Im Speziellen enthält der Smart Contract 52 Programmcode mit einem Entscheidungsblock (nicht gezeigt), der von einem Orakel-Wert in einer in dem Transaktionsbuch 4 künftig noch zu bestätigten Instanz 511 der Orakel-Transaktion 51 abhängt. Der Smart Contract 52 ist dazu eingerichtet, kontinuierlich, d.h. bei jedem Bestätigen eines auf den Block 42 folgenden Blocks 43, 44 ausgeführt zu werden.

Nachdem der Smart Contract 52 in dem zweiten Datenblock 42 des Transaktionsbuchs 4 bestätigt worden ist, ermittelt die zweite Einheit 2 anhand des bestätigten Smart Contracts 52, beispielsweise durch Analysieren des Programmcodes des Smart Contracts 52 oder durch Auslesen eines deklarativen Kopfdatenabschnitts des Smart Contracts 52, dass der Bedarf an der Orakel-Transaktion 51 besteht.

In Reaktion auf das Bestätigen des Smart Contracts 52 in dem Transaktionsbuch 4 beginnt die Bereitstellungseinrichtung 10 ab diesem Zeitpunkt mit dem periodischen Bereitstellen von Instanzen 511, 512 der Orakel-Transaktion 51. Dies führt dazu, dass in dem Block 43 eine erste Instanz 511 der Orakel-Transaktion 51 bestätigt ist, in dem Block 44 eine zweite Instanz der Orakel-Transaktion 512 bestätigt ist und so weiter.

Durch das Bereitstellen der ersten Instanz 511 der Orakel-Transaktion 51 im Block 43 wird das Ausführen des Smart Contracts 52 ermöglicht, so dass im Block 44 erstmals eine Ergebnis-Transaktion 53 bestätigt ist, die ein Ausführungsergebnis des Smart Contracts 52 umfasst, das beim Ausführen des Smart Contracts 52 im Rahmen des Bestätigens des vorangehenden Blocks 43 entstanden ist. Die Ergebnis-Transaktion 53 kann beispielsweise eine Kryptotoken-Transaktion, eine Steuertransaktion oder dergleichen sein.

Gemäß der vorliegenden Variante werden vorteilhaft keine Instanzen 511, 512 der Orakel-Transaktion 51 bereitgestellt, solange in dem Transaktionsbuch 4 kein Smart Contract 52 registriert ist, der die Orakel-Transaktion 51 referenziert.

Fig. 10 zeigt ein Transaktionsbuch 4 des verteilten Datenbanksystems 100 bei Verwendung der Bereitstellungseinrichtung 10 gemäß einer sechsten Variante des Ausführungsbeispiels.

Anders als bei der in Fig. 9 gezeigten Variante ist der Smart Contract 52 gemäß den nachstehend beschriebenen sechsten, siebten und achten Varianten dazu eingerichtet, nur ausgeführt zu werden, wenn er von einer Nicht-Orakel-Transaktion, wie etwa einer an den Smart Contract 52 gerichteten Kryptotoken-Transaktion 56, aktiviert wird. Anders ausgedrückt referenziert der Smart Contract 52 nicht nur eine zukünftig noch zu bestätigende Instanz der Orakel-Transaktion 51, sondern auch eine zukünftig noch zu tätigende Kryptotoken-Transaktion 56.

Zum Zeitpunkt des Bestätigens des Blocks 42 erkennt die zweite Einheit 2 der Bereitstellungseinrichtung 10 zwar, dass der Smart Contract 52 die Orakel-Transaktion 51 referenziert, sie erkennt jedoch auch, dass in dem Transaktionsbuch 4 die Kryptotoken-Transaktion 56 noch nicht bestätigt ist. Daher erlangt die erste Einheit 1 zu diesem Zeitpunkt noch keine Instanz der Orakel-Transaktion 51 und die dritte Einheit 3 der Bereitstellungseinrichtung 10 stellt zu diesem Zeitpunkt noch keine Instanz der Orakel-Transaktion 51 bereit. Dementsprechend ist in Block 43 keine Instanz der Orakel-Transaktion 51 bestätigt. Erst wenn in Block 44 die von den Smart Contract 52 referenzierende Nicht-Orakel-Transaktion bzw. Kryptotoken-Transaktion 56 bestätigt worden ist, erkennt die zweite Einheit 2, dass nun bis auf die fehlende Orakel-Transaktion 51 alle Voraussetzungen für die Ausführung des Smart Contracts 52 gegeben sind und der Bedarf an der Orakel-Transaktion 51 besteht. In Reaktion darauf erlangt die erste Einheit 1 eine Instanz 511 der Orakel-Transaktion 51, und die dritte Einheit 3 stellt die Instanz 511 der Orakel-Transaktion 51 in dem verteilten Datenbanksystem 100 bereit. Diese Instanz 511 der Orakel-Transaktion 51 wird in dem nachfolgenden Block 45 bestätigt. In dem auf diesen folgenden Block 46 wird daraufhin die Ergebnis-Transaktion 53 des Smart Contracts 52 bestätigt.

Demgemäß kann das Erlangen der Orakel-Transaktion 51 und das Bereitstellen und Bestätigen der Orakel-Transaktion 51 durch die Bereitstellungseinrichtung 10 vorteilhafterweise erst dann erfolgen, wenn alle sonstigen Voraussetzungen zum Ausführen des Smart Contracts 52 erfüllt sind.

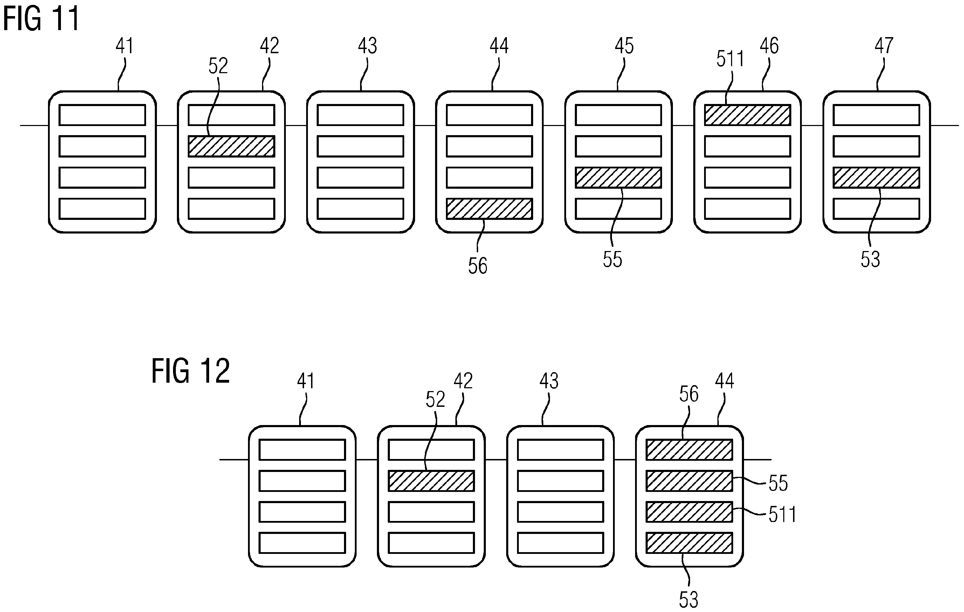

Fig. 11 zeigt ein Transaktionsbuch 4 des verteilten Datenbanksystems 100 bei Verwendung der Bereitstellungseinrichtung 10 gemäß einer siebten Variante des Ausführungsbeispiels.

Gemäß der siebten Variante erkennt die zweite Einheit 2 den Bedarf an der Orakel-Transaktion 51 nicht durch Analysieren von Programmcode eines in dem Transaktionsbuch bestätigten Smart Contracts 52. Vielmehr erkennt die zweite Einheit 2 den Bedarf an der Orakel-Transaktion 51 nur dann, wenn in dem Transaktionsbuch 4 eine explizite Orakel-Anforderungs-Transaktion 55 bestätigt wird.

Demgemäß stellt die Bereitstellungseinrichtung 10 gemäß der siebten Variante weder nach dem Bestätigen des Smart Contracts 52 noch nach dem Bestätigen der Kryptotoken-Transaktion 56, die den Smart Contract 52 referenziert, welcher Bedarf an der Orakel-Transaktion 51 hat, eine Instanz der Orakel-Transaktion 51 bereit. In Reaktion auf das Bestätigen der Kryptotoken-Transaktion 56 wird in dem verteilten Datenbanksystem 100 der Smart Contract 52 ausgeführt. Der Smart Contract zeigt seinen Bedarf an der Kryptotoken-Transaktion dadurch an, dass er in dem verteilten Datenbanksystem die Orakel-Anforderungstransaktion 55 bereitstellt. In Reaktion auf das Bestätigen der Orakel-Anforderungstransaktion 55 durch das verteilte Datenbanksystem 100 im Block 45 erkennt die zweite Einheit 2 den Bedarf an der Orakel-Transaktion 51 und stellt in dem verteilten Datenbanksystem 100 die Instanz 511 der Orakel-Transaktion 51 bereit. Diese wird im Block 46 bestätigt. Im drauffolgenden Block 47 wird demgemäß die Ergebnis-Transaktion 53 des Smart Contracts 52 bestätigt.

Es versteht sich, dass die Orakel-Anforderungs-Transaktion eine Adresse, Kennung, Challenge oder eine andere Referenzinformation umfassen kann, anhand derer die Bereitstellungseinrichtung 10 erkennen kann, dass die von ihr bereitstellbare Orakel-Transaktion 51 und nicht eine von einer anderen Orakel-Einrichtung (nicht gezeigt) bereitstellbare Orakel-Transaktion (nicht gezeigt) benötigt wird.

Fig. 12 zeigt ein Transaktionsbuch 4 des verteilten Datenbanksystems 100 bei Verwendung der Bereitstellungseinrichtung 10 gemäß einer achten Variante des Ausführungsbeispiels.

Bei der in Fig. 12 gezeigten achten Variante umfasst die Bereitstellungseinrichtung 10 eine der Knoteneinrichtungen 20-24 des verteilten Datenbanksystems 100, wie dies beispielsweise in Fig. 7 gezeigt ist. Andres ausgedrückt nimmt die Bereitstellungseinrichtung 10 an dem Austausch von unbestätigten Transaktionen in dem verteilten Datenbanksystem 100 teil. Die zweite Einheit 2 ist dazu eingerichtet, den Bedarf an der Orakel-Transaktion 51 bereits dann zu ermitteln, wenn in dem verteilten Datenbanksystem 100 eine unbestätigte Transaktion 56 bereitgestellt wird, die den Smart Contract 52 referenziert (seine Ausführung veranlasst), und/oder dann zu ermitteln, wenn in dem verteilten Datenbanksystem 100 eine noch unbestätigte Orakel-Anforderungs-Transaktion 55 bereitgestellt wird, die die Orakel-Transaktion 51 referenziert. Somit kann die Bereitstellungseinrichtung 10 unmittelbar auf das Bereitstellen einer jeweiligen unbestätigten Transaktion 55, 56 reagieren, noch bevor diese in dem Transaktionsbuch 4 bestätigt wird, und die Instanz 511 der Orakel-Transaktion 51 bereitstellen.

Anders ausgedrückt kann die Bereitstellungseinrichtung 10 gemäß der achten Variante den in dem verteilten Datenbanksystem 100 entstehenden Bedarf an der Orakel-Transaktion 51 vorteilhaft frühzeitig antizipieren.

Dies kann, wie in Fig. 12 gezeigt, den vorteilhaften Effekt haben, dass die Instanz 511 der Orakel-Transaktion 51 frühzeitiger bereitgestellt wird und somit die den Smart Contract 52 referenzierende Kryptotoken-Transaktion 56 und/oder die Orakel-Anforderungs-Transaktion 55, die Instanz 511 der Orakel-Transaktion 51 und die Ergebnis-Transaktion 53 des Smart Contracts 52 vorteilhaft in ein und demselben Block 44 bestätigt werden, anstatt, wie in Fig. 11 gezeigt, in vier aufeinanderfolgenden Blöcken 44 bis 47.

Obwohl die vorliegende Erfindung anhand von Ausführungsbeispielen beschrieben wurde, ist sie vielfältig modifizierbar.

Insbesondere kann jede der in den Fig. 4 bis 7 gezeigten ersten bis vierten Variante des Ausführungsbeispiels mit jeder der in den Fig. 9 bis 12 gezeigten fünften bis achten Variante des Ausführungsbeispiels kombiniert werden, sofern dadurch keine Widersprüche entstehen.

Anhand des Ausführungsbeispiels wurden ein stark vereinfachtes verteiltes Datenbanksystem 100 und eine stark vereinfachte Orakel-Einrichtung 30 beschreiben, und es wurden lediglich die Grundzüge der Funktionsweise der Blockketten-Technologie angerissen. Es versteht sich, dass der von den Ansprüchen definierte Gedanke der Erfindung auch auf beliebige Weiterbildungen von verteilten Datenbanksystemen, Blockketten-Datenbanken und Orakel-Einrichtungen anwendbar ist, insbesondere auch auf solche, wie sie in den Referenzen [1] bis [8] genannt sind.

Wie vorstehend beschrieben, wird eine Orakel-Transaktion 51 vorteilhaft nur dann in dem verteilten Datenbanksystem 100 bereitgestellt und bestätigt, wenn in dem verteilten Datenbanksystem 100 ein Bedarf an der Orakel-Transaktion 51 besteht. Eine jeweilige Instanz der Orakel-Transaktion 51 kann nur in Reaktion auf den Bedarf erstellt werden, oder es können unabhängig von dem Bedarf erstellte Instanzen der Orakel-Transaktion bedarfsabhängig gefiltert werden.

Der Bedarf kann anhand von in dem Transaktionsbuch 4 des verteilten Datenbanksystems 100 bestätigten Transaktionen, Smart Contracts und dergleichen ermittelt werden oder anhand von in dem verteilten Datenbanksystem 100 bereitgestellten unbestätigten Transaktionen, Smart Contracts und dergleichen antizipierend ermittelt werden.

Die Bereitstellungseinrichtung 20 kann durch Analyse von Programmcode einer Transaktion oder eines Smart Contracts eigenständig den Bedarf ermitteln, oder sie kann von einem ausgeführten Smart Contract, der den Bedarf hat, mittels einer Orakel-Anforderungs-Transaktion über den Bedarf informiert werden, d.h. den Bedarf auf Anforderung ermitteln.

Somit kann vorteilhaft eine Transaktionslast des verteilten Datenbanksystems 100 dadurch gesenkt werden, dass nicht bestätigte Instanzen der Orakel-Transaktionen 51 nicht in dem Transaktionsbuch 4 bestätigt werden.

### Referenzen

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles
   https://blockchainhub.net/blockchain-oracles/

## Patentansprüche

1. Einrichtung (10) zum Bereitstellen einer Orakel-Transaktion (51) in einem verteilten Datenbanksystem (100) mit einem Transaktionsbuch (4), wobei die Einrichtung (10) aufweist:
eine erste Einheit (1) zum Erlangen der Orakel-Transaktion (51);
eine zweite Einheit (2) zum Ermitteln, ob in dem verteilten Datenbanksystem (10) ein Bedarf an der Orakel-Transaktion (51) besteht; und
eine dritte Einheit (3) zum Bereitstellen der Orakel-Transaktion (51) in dem verteilten Datenbanksystem (100) nur unter der Bedingung, dass in dem verteilten Datenbanksystem (100) der Bedarf an der Orakel-Transaktion (51) besteht.

2. Einrichtung nach Anspruch 1,
**dadurch gekennzeichnet,**
**dass** die zweite Einheit (2) dazu eingerichtet ist, zu ermitteln, dass der Bedarf an der Orakel-Transaktion (51) besteht, wenn in dem Transaktionsbuch (4) des verteilten Datenbanksystems (100) ein Smart Contract (52) bestätigt ist, der die Orakel-Transaktion (51) referenziert.

3. Einrichtung nach Anspruch 2,
**dadurch gekennzeichnet,**
**dass** die zweite Einheit (2) dazu eingerichtet ist, einen Programmcode des Smart Contracts (52) zu analysieren, um zu ermitteln, ob der Smart Contract (52) die Orakel-Transaktion (51) referenziert.

4. Einrichtung nach Anspruch 2 oder 3,
**dadurch gekennzeichnet,**
**dass** die zweite Einheit (2) dazu eingerichtet ist, zu ermitteln, dass der Bedarf an der Orakel-Transaktion (51) besteht, wenn in dem verteilten Datenbanksystem (100) eine unbestätigte Transaktion bereitgestellt ist, die den Smart Contract (52) umfasst oder referenziert, welcher die Orakel-Transaktion (51) referenziert.

5. Einrichtung nach einem der Ansprüche 2 bis 4,
**dadurch gekennzeichnet,**
**dass** die zweite Einheit (2) dazu eingerichtet ist, den Bedarf an der Orakel-Transaktion (51) unter der Bedingung zu ermitteln, dass in dem Transaktionsbuch (4) des verteilten Datenbanksystems (100) jede einer Anzahl von dem Smart Contract (52) referenzierter Nicht-Orakel-Transaktionen (56) bestätigt ist.

6. Einrichtung nach einem der Ansprüche 1 bis 5,
**dadurch gekennzeichnet,**
**dass** die erste Einheit (1) dazu eingerichtet ist, die Orakel-Transaktion (51) durch Empfangen von einer zu der Einrichtung (1) externen Orakel-Einrichtung (30) zu erlangen, und
die dritte Einheit (3) ferner dazu eingerichtet ist, die Orakel-Transaktion (51) zu verwerfen, wenn in dem verteilten Datenbanksystem (100) der Bedarf an der Orakel-Transaktion (51) nicht besteht.

7. Einrichtung nach einem der Ansprüche 1 bis 5,
**dadurch gekennzeichnet,**
**dass** die erste Einheit (1) dazu eingerichtet ist, einen Orakel-Wert zu bestimmen und die Orakel-Transaktion (51) durch Erzeugen der Orakel-Transaktion (51) und Aufnehmen des Orakel-Wertes in die erzeugte Orakel-Transaktion (51) zu erlangen, sofern in dem verteilten Datenbanksystem (100) der Bedarf an der Orakel-Transaktion (51) besteht.

8. Einrichtung nach Anspruch 7,
**dadurch gekennzeichnet,**
**dass** die Einrichtung (10) einen Sensor (6) umfasst und/oder kommunikativ mit einem Sensor (6) gekoppelt ist,
wobei die erste Einheit (1) dazu eingerichtet ist, den Messwert des Sensors (6) zu erhalten und als den Orakel-Wert der Orakel-Transaktion (51) zu bestimmen.

9. Einrichtung nach einem der Ansprüche 1 bis 8,
**dadurch gekennzeichnet,**
**dass** die zweite Einheit (2) dazu eingerichtet ist, zu ermitteln, dass der Bedarf an der Orakel-Transaktion (51) besteht, wenn in dem Transaktionsbuch (4) des verteilten Datenbanksystems (100) eine Orakel-Anforderungs-Transaktion (55) bestätigt wird.

10. Einrichtung nach einem der Ansprüche 1 bis 8,
**dadurch gekennzeichnet,**
**dass** die zweite Einheit (2) dazu eingerichtet ist, zu ermitteln, dass der Bedarf an der Orakel-Transaktion (51) besteht, wenn in dem verteilten Datenbanksystem (1000) eine unbestätigte Orakel-Anforderungs-Transaktion (55) bereitgestellt wird.

11. Einrichtung nach Anspruch 9 oder 10,
**dadurch gekennzeichnet,**
**dass** die erste Einheit (1) dazu eingerichtet ist, die Orakel-Transaktion (55) in Reaktion auf das von der zweiten Einheit (2) ermittelte Bereitstellen oder Bestätigen der Orakel-Anforderungs-Transaktion (55) zu erlangen.

12. Einrichtung nach einem der Ansprüche 9 bis 11,
**dadurch gekennzeichnet,**
**dass** die zweite Einheit (2) dazu eingerichtet ist, basierend auf einem in der Orakel-Anforderungs-Transaktion (55) enthaltenen Steuerbefehl eine Steueraktion zu veranlassen.

13. Einrichtung nach Anspruch 12,
**dadurch gekennzeichnet,**
**dass** der Orakel-Wert der Orakel-Transaktion (51) eine Bestätigungsinformation über ein Ergebnis des Durchführens der veranlassten Steueraktion umfasst.

14. Verfahren zum Bereitstellen einer Orakel-Transaktion (51) in einem verteilten Datenbanksystem (100) mit einem Transaktionsbuch (4), wobei das Verfahren umfasst:
Erlangen (S1) der Orakel-Transaktion (51);
Ermitteln (S2), ob in dem verteilten Datenbanksystem (100) ein Bedarf an der Orakel-Transaktion (51) besteht; und
Bereitstellen (S3) der Orakel-Transaktion (51) in dem verteilten Datenbanksystem (100) nur unter der Bedingung, dass in dem verteilten Datenbanksystem (100) der Bedarf an der Orakel-Transaktion (51) besteht.

15. Computerprogrammprodukt, welches auf einer programmgesteuerten Einrichtung die Durchführung des Verfahrens nach Anspruch 14 veranlasst.

## Geänderte Patentansprüche

### Geänderte Patentansprüche gemäss Regel 137(2) EPÜ.

1. Einrichtung (10) zum Bereitstellen einer Orakel-Transaktion (51) in einem aus einer Anzahl Knoteneinrichtungen (20-24) gebildeten verteilten Datenbanksystem (100) mit einem Transaktionsbuch (4), wobei die Einrichtung (10) aufweist:
eine erste Einheit (1) zum Erlangen der Orakel-Transaktion (51) durch Empfangen der Orakel-Transaktion (51) von einer Orakel-Einrichtung (30) oder durch Erzeugen der Orakel-Transaktion (51) auf Grundlage einer empfangenen, gemessenen oder generierten Information;
**gekennzeichnet durch**:
eine zweite Einheit (2) zum Ermitteln, **durch** Prüfen von vorliegenden, noch unbestätigten Transaktionen des verteilten Datenbanksystems (100) und/oder **durch** Analysieren von in dem Transaktionsbuch (4) des verteilten Datenbanksystems (100) bestätigten Smart Contracts, ob in dem verteilten Datenbanksystem (10) ein Bedarf an der Orakel-Transaktion (51) besteht; und
eine dritte Einheit (3) zum Bereitstellen der Orakel-Transaktion (51) zum Bestätigen (100) **durch** das verteilte Datenbanksystem (100) **durch** Übermitteln der Orakel-Transaktion (51) an mindestens eine der Knoteneinrichtungen (20-24) des verteilten Datenbanksystems (100) nur unter der Bedingung, dass in dem verteilten Datenbanksystem (100) der Bedarf an der Orakel-Transaktion (51) besteht.

2. Einrichtung nach Anspruch 1,
**dadurch gekennzeichnet,**
**dass** die zweite Einheit (2) dazu eingerichtet ist, zu ermitteln, dass der Bedarf an der Orakel-Transaktion (51) besteht, wenn in dem Transaktionsbuch (4) des verteilten Datenbanksystems (100) ein Smart Contract (52) bestätigt ist, der die Orakel-Transaktion (51) referenziert.

3. Einrichtung nach Anspruch 2,
**dadurch gekennzeichnet,**
**dass** die zweite Einheit (2) dazu eingerichtet ist, einen Programmcode des Smart Contracts (52) zu analysieren, um zu ermitteln, ob der Smart Contract (52) die Orakel-Transaktion (51) referenziert.

4. Einrichtung nach Anspruch 2 oder 3,
**dadurch gekennzeichnet,**
**dass** die zweite Einheit (2) dazu eingerichtet ist, zu ermitteln, dass der Bedarf an der Orakel-Transaktion (51) besteht, wenn in dem verteilten Datenbanksystem (100) eine unbestätigte Transaktion bereitgestellt ist, die den Smart Contract (52) umfasst oder referenziert, welcher die Orakel-Transaktion (51) referenziert.

5. Einrichtung nach einem der Ansprüche 2 bis 4,
**dadurch gekennzeichnet,**
**dass** die zweite Einheit (2) dazu eingerichtet ist, den Bedarf an der Orakel-Transaktion (51) unter der Bedingung zu ermitteln, dass in dem Transaktionsbuch (4) des verteilten Datenbanksystems (100) jede einer Anzahl von dem Smart Contract (52) referenzierter Nicht-Orakel-Transaktionen (56) bestätigt ist.

6. Einrichtung nach einem der Ansprüche 1 bis 5,
**dadurch gekennzeichnet,**
**dass** die erste Einheit (1) dazu eingerichtet ist, die Orakel-Transaktion (51) durch Empfangen von einer zu der Einrichtung (1) externen Orakel-Einrichtung (30) zu erlangen, und
die dritte Einheit (3) ferner dazu eingerichtet ist, die Orakel-Transaktion (51) zu verwerfen, wenn in dem verteilten Datenbanksystem (100) der Bedarf an der Orakel-Transaktion (51) nicht besteht.

7. Einrichtung nach einem der Ansprüche 1 bis 5,
**dadurch gekennzeichnet,**
**dass** die erste Einheit (1) dazu eingerichtet ist, einen Orakel-Wert zu bestimmen und die Orakel-Transaktion (51) durch Erzeugen der Orakel-Transaktion (51) und Aufnehmen des Orakel-Wertes in die erzeugte Orakel-Transaktion (51) zu erlangen, sofern in dem verteilten Datenbanksystem (100) der Bedarf an der Orakel-Transaktion (51) besteht.

8. Einrichtung nach Anspruch 7,
**dadurch gekennzeichnet,**
**dass** die Einrichtung (10) einen Sensor (6) umfasst und/oder kommunikativ mit einem Sensor (6) gekoppelt ist,
wobei die erste Einheit (1) dazu eingerichtet ist, den Messwert des Sensors (6) zu erhalten und als den Orakel-Wert der Orakel-Transaktion (51) zu bestimmen.

9. Einrichtung nach einem der Ansprüche 1 bis 8,
**dadurch gekennzeichnet,**
**dass** die zweite Einheit (2) dazu eingerichtet ist, zu ermitteln, dass der Bedarf an der Orakel-Transaktion (51) besteht, wenn in dem Transaktionsbuch (4) des verteilten Datenbanksystems (100) eine Orakel-Anforderungs-Transaktion (55) bestätigt wird.

10. Einrichtung nach einem der Ansprüche 1 bis 8,
**dadurch gekennzeichnet,**
**dass** die zweite Einheit (2) dazu eingerichtet ist, zu ermitteln, dass der Bedarf an der Orakel-Transaktion (51) besteht, wenn in dem verteilten Datenbanksystem (1000) eine unbestätigte Orakel-Anforderungs-Transaktion (55) bereitgestellt wird.

11. Einrichtung nach Anspruch 9 oder 10,
**dadurch gekennzeichnet,**
**dass** die erste Einheit (1) dazu eingerichtet ist, die Orakel-Transaktion (55) in Reaktion auf das von der zweiten Einheit (2) ermittelte Bereitstellen oder Bestätigen der Orakel-Anforderungs-Transaktion (55) zu erlangen.

12. Einrichtung nach einem der Ansprüche 9 bis 11,
**dadurch gekennzeichnet,**
**dass** die zweite Einheit (2) dazu eingerichtet ist, basierend auf einem in der Orakel-Anforderungs-Transaktion (55) enthaltenen Steuerbefehl eine Steueraktion zu veranlassen.

13. Einrichtung nach Anspruch 12,
**dadurch gekennzeichnet,**
**dass** der Orakel-Wert der Orakel-Transaktion (51) eine Bestätigungsinformation über ein Ergebnis des Durchführens der veranlassten Steueraktion umfasst.

14. Verfahren zum Bereitstellen einer Orakel-Transaktion (51) in einem aus einer Anzahl Knoteneinrichtungen (20-24) gebildeten verteilten Datenbanksystem (100) mit einem Transaktionsbuch (4), wobei das Verfahren umfasst:
Erlangen (S1) der Orakel-Transaktion (51) durch Empfangen der Orakel-Transaktion (51) von einer Orakel-Einrichtung (30) oder durch Erzeugen der Orakel-Transaktion (51) auf Grundlage einer empfangenen, gemessenen oder generierten Information;
**gekennzeichnet durch**:
Ermitteln (S2), **durch** Prüfen von vorliegenden, noch unbestätigten Transaktionen des verteilten Datenbanksystems (100) und/oder **durch** Analysieren von in dem Transaktionsbuch (4) des verteilten Datenbanksystems (100) bestätigten Smart Contracts, ob in dem verteilten Datenbanksystem (100) ein Bedarf an der Orakel-Transaktion (51) besteht; und
Bereitstellen (S3) der Orakel-Transaktion (51) zum Bestätigen (100) **durch** das verteilte Datenbanksystem (100) **durch** Übermitteln der Orakel-Transaktion (51) an mindestens eine der Knoteneinrichtungen (20-24) des verteilten Datenbanksystems (100) nur unter der Bedingung, dass in dem verteilten Datenbanksystem (100) der Bedarf an der Orakel-Transaktion (51) besteht.

15. Computerprogrammprodukt, welches auf einer programmgesteuerten Einrichtung die Durchführung des Verfahrens nach Anspruch 14 veranlasst.
